# DEMANDE DE BREVET EUROPEEN

(11) **EP 4 421 390 A1**
(43) Date de publication de la demande: **28.08.2024**
(21) Numéro de dépôt: 24158429.1
(22) Date de dépôt: 19.02.2024
(51) Int. Cl.: F24C 7/04, F24C 7/08, H05B 3/00, A23L 3/365, F24C 15/16

(54) **PROCÉDÉ ET DISPOSITIF DE CHAUFFAGE ET/OU DE CUISSON D'UN PRODUIT ALIMENTAIRE CONGELÉ OU SURGELÉ**

(30) Priorité: 24.02.2023 FR 2301726
(71) Demandeur: Matit, 01560 Feillens (FR)
(72) Inventeur: PETIT, Pierre, 71850 Charnay les Macon (FR)
(74) Mandataire: Fidal Innovation

(57) **Abrégé**

Procédé de chauffage et/ou de cuisson d'un produit alimentaire congelé ou surgelé, le procédé comprenant :
- une étape dite de décongélation ;
- une étape dite de cuisson,
de sorte que pendant l'étape de décongélation, le produit alimentaire est chauffé sans être cuit.

## Description

### DOMAINE DE L'INVENTION

La présente invention se rapporte à un four à pizza et autres produits de type restauration rapide (appelée « fast-food »), alimenté par le réseau électrique domestique, destiné à cuire une pizza surgelée, congelée ou fraiche dans un temps réduit de l'ordre de deux à trois minutes.

Ce four se destine principalement à être utilisé dans le secteur de la restauration rapide, pour lequel il convient que la cuisson des aliments soit quasi-instantanée, l'affluence de clientèle sur des temps réduits (heures de repas) obligeant à cuire sans produire d'attente dans le public.

Par ailleurs, les commerces de « fast-food » sont souvent placés dans des locaux fournis exclusivement par une alimentation en électricité domestique. Aussi convient-il que les dispositifs de cuisson se satisfassent de cette contrainte d'alimentation en énergie, ce qui contraint la qualité de cuisson.

Plus précisément, l'invention se rapporte à un four de cuisson de ce type particulièrement adapté à des produits congelés.

### ARRIÈRE-PLAN TECHNOLOGIQUE

Il existe plusieurs types de four. La présente invention se rapporte aux fours spécialement conçus pour cuire rapidement des aliments à pâte, de type pizzas notamment, et qui comprennent à cet effet un support chauffé, appelé sole.

Dans le domaine des fours de cuisson rapide de pizzas, le problème principal est de fournir une cuisson dans un temps réduit, tout en proposant une pizza cuite répondant à des critères gustatifs satisfaisants, et notamment : température uniforme, cuisson de la garniture et pâte croustillante.

La déposante est à l'origine de plusieurs innovations dans ce domaine pour surmonter ce problème.

Le document FR2889029 propose ainsi un four comprenant une enceinte à l'intérieur de laquelle se trouve une plaque de sole chauffée par des résistances électriques disposées sous la plaque de sole. Des tubes émetteurs de rayons chauffants sont placés dans l'enceinte au-dessus de la plaque de sole, et à distance, de sorte qu'un produit alimentaire sur la sole est chauffé à la fois par la sole. Une plaque réfléchissante est disposée au-dessus des tubes émetteurs afin de concentrer le rayonnement sur le produit posé sur la plaque de sole. Un tel four permet d'obtenir un effet croustillant de la pâte notamment grâce à la combinaison des rayons chauffants des tubes émetteurs, du contact avec la plaque de sole chauffée et l'atmosphère chaude de l'enceinte du four.

Toutefois, ce four n'est pas étudié pour des aliments de grande taille correspondant au diamètre d'une pizza, et convient plutôt pour les paninis, hot-dogs, gaufres, et crêpes. Les pizzas de dimensions supérieures à 25 cm ne peuvent être cuites sur toutes la surface, ce qui engendre des désagréments dans la qualité de la cuisine.

Le document FR3071043 est relatif à un dispositif de four électrique alimenté par le réseau domestique. Ce four est destiné à cuire indifféremment des pizzas fraiches, surgelées ou congelées, et se caractérise par un procédé de cuisson en deux phases successives : en un premier temps par l'intermédiaire d'une sole chauffée et dotée d'une pierre réfractaire qui cuit le dessous de la pizza, puis dans un second temps des lampes infrarouges à ondes courtes placées sur la voute du four finissent la cuisson des ingrédients contenus sur la pâte à pizza, les deux cuissons intervenant automatiquement l'une après l'autre pour être compatible avec la puissance desservie par le réseau électrique domestique. Si ce dispositif satisfait à la cuisson de pizzas courantes peu chargées en ingrédients, un inconvénient se révèle sur la cuisson de pizzas épaisses ou d'autres préparations (de types : hot dog, croque-monsieur...), en ce que l'humidité résiduelle contenue dans les aliments est insuffisamment évacuée, ce qui ne permet pas de garantir la cuisson à coeur des aliments, si bien qu'il se peut que des zones froides subsistent tandis que la pâte cuite peut parfois être détrempée. Ces inconvénients sont majeurs pour le rendu des saveurs du produit fini.

Il est également connu un procédé de cuisson d'un produit alimentaire, par exemple une pizza surgelée, dans l'enceinte d'un four, procédé dans lequel :
- On chauffe un support jusqu'à atteindre une température de consigne ;
- On pose le produit sur le support dans l'enceinte du four ;
- Simultanément, on coupe le chauffage du support, et on active des moyens de chauffage par rayonnement infra-rouge disposés au-dessus du support ;
- Le produit cuit pendant une durée déterminée ;
- On sort le produit du four.

Ce procédé apporte une satisfaction pour un certain type de produit alimentaire, en l'occurrence pour des pizzas fines, c'est-à-dire à pâte peu épaisse et/ou avec une garniture peu fournie. En effet, plus la pâte et épaisse, et/ou plus la garniture est fournie, plus l'épaisseur totale de la pizza est importante, et plus l'énergie totale pour cuire une telle pizza est élevée. En plaçant le produit congelé dans un réfrigérateur avant de le mettre à cuire dans le four, le résultat de la cuisson peut être satisfaisant. Toutefois, cela implique une manipulation préalable et une gestion des stocks qui peuvent être incompatibles avec les besoins de la restauration rapide.

Pour augmenter l'énergie fournie, on peut soit augmenter le temps de cuisson, soit augmenter la puissance des éléments chauffants, ou les deux.

Or, comme indiqué précédemment, le temps de cuisson doit rester réduit afin de répondre aux besoins de la restauration rapide. En outre, le four de cuisson doit pouvoir fonctionner sur le réseau électrique domestique, de sorte que la puissance à un instant donné ne peut pas dépasser une valeur limite.

L'invention vise ainsi à notamment apporter une solution aux problèmes précités.

Ainsi, selon un premier aspect, l'invention propose un procédé de chauffage et/ou de cuisson d'un produit alimentaire permettant de cuire un aliment surgelé ou congelé de manière satisfaisante gustativement.

Selon un deuxième aspect, le procédé de chauffage et/ou de cuisson permet une cuisson rapide, adaptée à la restauration de type fast-food.

Selon un troisième aspect, le procédé de chauffage et/ou de cuisson permet un chauffage puis une cuisson homogène indépendamment de l'épaisseur et/ou du diamètre du produit alimentaire.

Selon un quatrième aspect, le procédé de chauffage et/ou de cuisson permet d'utiliser un dispositif branché sur un réseau domestique.

Selon un cinquième aspect, le procédé de chauffage et/ou de cuisson permet de ne pas augmenter les coûts de fabrication du dispositif pour mettre en oeuvre le procédé.

### RÉSUMÉ DE L'INVENTION

Ainsi, selon un premier aspect, l'invention se rapporte à un procédé de chauffage et/ou de cuisson d'un produit alimentaire congelé ou surgelé, notamment d'une pâte alimentaire surgelée ou congelée, à l'aide un dispositif destiné à être connecté à une installation électrique en monophasé. Le dispositif comprend notamment au moins une enceinte de chauffage munie d'une ouverture refermable pour y insérer le produit. Ladite enceinte est équipée d'au moins un support sur lequel le produit est destiné à être posé, un ensemble de chauffage du support, et au moins une rampe de chauffage disposée à distance et au-dessus du support. La rampe est adaptée pour développer une puissance de chauffe variable. Le dispositif comprend en outre un système de contrôle configuré pour régler la puissance de la rampe. Le procédé comprend alors notamment :
- une étape de mise en place du produit alimentaire sur le support ;
- une étape dite de décongélation, dans laquelle la puissance de chauffe de la rampe est réglée à une puissance dite de décongélation ;
- une étape dite de cuisson, dans laquelle la puissance de chauffe de la rampe est réglée à une puissance dite de cuisson supérieure à la puissance de décongélation.

Ainsi, pendant l'étape de décongélation, le produit alimentaire est chauffé sans être cuit. De plus, la température du support est régulée par le système de contrôle pour atteindre une température de consigne au plus tard pendant l'étape de cuisson, et par exemple au démarrage de l'étape de la cuisson, assurant une cuisson optimale du produit alimentaire.

Grâce à ces dispositions, il est possible de décongeler et de cuire un aliment, notamment une pizza, dans un seul dispositif en conservant les propriétés organoleptiques de l'aliment. Plus précisément, la phase de décongélation permet de retirer l'humidité de l'aliment avant la cuisson, de sorte que la phase de cuisson intervient sur un aliment dont la fraîcheur correspond à un produit alimentaire qui sort d'un réfrigérateur par exemple. La cuisson peut alors se dérouler de manière connue. Notamment, dans le cas d'une pizza, le croustillant de la pâte est assuré, et la cuisson de la garniture est homogène et optimale.

Selon différents aspects, il est possible de prévoir l'une et/ou l'autre des caractéristiques ci-dessous prises seules ou en combinaison.

Selon un mode de réalisation, ladite rampe peut comprendre au moins trois zones de chauffage à puissance variable, à savoir successivement depuis l'ouverture de l'enceinte une zone dite avant, une zone dite centrale et une zone dite arrière, la puissance de chauffe de chaque zone étant réglée par le système de contrôle. La puissance de chauffe de la zone centrale, respectivement pendant l'étape de décongélation et pendant l'étape de cuisson, peut alors être supérieure à la puissance de chauffe de la zone avant et la puissance de chauffe de la zone arrière respectivement pendant l'étape de décongélation et l'étape de cuisson.

Ainsi, la puissance de chauffe plus élevée dans la zone centrale garantie que le centre du produit alimentaire, qui est en général plus épais et/ou plus chargé en garniture que les bords, soit décongelé puis cuit de manière homogène par rapport aux bords.

Selon un mode de réalisation, la puissance de chauffe de la zone arrière respectivement pendant l'étape de décongélation et l'étape de cuisson, peut être inférieure ou égale à la puissance de chauffe de la zone avant respectivement pendant l'étape de décongélation et de cuisson.

Ainsi, la baisse de température due à la proximité de l'ouverture de l'enceinte est compensée par une puissance de chauffage plus élevée dans la zone avant, tandis que l'effet de concentration des rayons chauffants vers le fond de l'enceinte est compensé par une puissance de chauffage plus faible dans la zone arrière. L'effet de décongélation et la cuisson du produit alimentaire sont ainsi homogènes. L'utilisation de l'énergie est optimisée.

Selon un mode de réalisation, pendant l'étape de décongélation :
- la puissance de chauffe de la zone centrale de la rampe peut être réglée pour être inférieure d'au moins 15% à la puissance de chauffe de la zone centrale pendant l'étape de cuisson,
- la puissance de chauffe de la zone avant de la rampe peut être réglée pour être inférieure d'au moins 20% par rapport à puissance de chauffe de la zone avant pendant l'étape de cuisson ;
- la puissance de chauffe de la zone arrière de la rampe peut être réglée pour être inférieure d'au moins 20% par rapport à la puissance de chauffe de la zone arrière pendant l'étape de cuisson.

Il ainsi possible de former chaque zone de la rampe par une lampe ou un groupe de lampes qui sont utilisés à la fois pour l'étape de décongélation et pour l'étape de cuisson. Le système de contrôle peut alors régler la puissance de chauffe de chaque zone pendant l'étape de cuisson comme correspondant à une puissance nominale de la lampe ou du groupe de lampes. Le nombre de lampes pour former la rampe peut ainsi être réduit à trois lampes, à savoir une lampe par zone. L'encombrement à l'intérieur de l'enceinte s'en trouvé réduit.

Selon un mode de réalisation :
- la puissance de chauffe de la zone centrale de la rampe pendant l'étape de décongélation peut être supérieure à la puissance de chauffe de la zone centrale de la rampe pendant l'étape de cuisson ;
- la puissance de chauffe de la zone avant et la puissance de chauffe de de la zone arrière pendant l'étape de décongélation peuvent être nulles.

Plus précisément, la zone avant et la zone arrière peuvent alors comprendre chacune une lampe ou un groupe de lampe et la zone centrale peut comprendre au moins une première lampe ou un premier groupe de lampes et une deuxième lampe ou un deuxième groupe de lampes. Ainsi :
- pendant l'étape de décongélation, la lampe ou le groupe de lampe de chacune de la zone avant et de la zone arrière peut être éteint, la première lampe ou le premier groupe de lampes de la zone centrale peut être allumé à sa puissance nominale et la deuxième lampe ou deuxième groupe de lampes peut être éteint ;
- pendant l'étape de cuisson, la lampe ou le groupe de lampe de chacune de la zone avant et de la zone arrière est allumé à sa puissance nominale, la première lampe ou le premier groupe de lampes de la zone centrale est éteint et la deuxième lampe ou deuxième groupe de lampes est allumé à la puissance nominale.

Ainsi, le système de contrôle n'a pas à gérer une variation continue de puissance, chaque lampe état soit allumée, et donc fonctionnant à sa puissance nominale, soit éteinte. Le système de contrôle est simplifié, et les coûts sont réduits.

Selon un mode de réalisation, préalablement à l'étape de mise en place sur le support, l'ensemble de chauffage du support peut être actionné pour chauffer ledit support jusqu'à une température de consigne et maintenir le support à la température de consigne. Cela permet notamment, lorsque le produit alimentaire comprend une pâte, comme une pizza, de garantir le croustillant de la pâte à la cuisson.

Selon un mode de réalisation, une fois la température de consigne atteinte, l'ensemble de chauffage du support est éteint avant d'enclencher l'étape de cuisson. De plus, une fois la température de consigne atteinte, l'ensemble de chauffage du support peut être éteint avant d'enclencher l'étape de décongélation. Ainsi, l'ensemble de chauffage du support et la rampe ne sont pas allumés en même temps pendant l'étape de décongélation et/ou l'étape de cuisson, limitant la consommation électrique. De préférence, l'ensemble de chauffage du support et la rampe ne sont jamais allumés en même temps, limitant la consommation électrique à l'un ou l'autre. Ainsi, le dispositif de chauffage pour la mise en oeuvre du procédé peut être branché sur un réseau électrique domestique.

Selon un mode de réalisation, la rampe comprend des lampes halogènes à ondes courtes, qui garantissent une montée de température rapide, de l'ordre de quelques secondes, et un chauffage adapté pour cuire des produits alimentaires.

Selon un mode de réalisation, l'ensemble de chauffage du support peut comprendre des résistances électriques en contact avec le support. Le chauffage du support est ainsi effectué efficacement sur l'ensemble de la surface du support, à moindre coût, avec des composants bon marché, qui se trouvent facilement dans le commerce et qui peuvent facilement être remplacés en cas de défaillance.

Selon un mode de réalisation, le dispositif peut comprendre un système de communication avec un appareil informatique. Le procédé peut alors comprendre une étape de réglage des durées de l'étape de décongélation et/ou de l'étape de cuisson via l'appareil informatique. Le réglage du dispositif s'en trouve simplifier. Il n'est alors pas besoin d'agir physiquement sur le système de contrôle, qui peut être modifié à distance.

Selon un deuxième aspect, l'invention concerne un dispositif de chauffage et/ou de cuisson d'un produit alimentaire congelé ou surgelé, notamment d'une pâte alimentaire surgelée ou congelée. Le dispositif est destiné à être connecté à une installation électrique en monophasé. Le dispositif peut comprendre notamment au moins une enceinte de chauffage munie d'une ouverture refermable pour y insérer le produit, ladite enceinte étant équipée d'au moins un support sur lequel le produit est destiné à être posé, un ensemble de chauffage du support, et au moins une rampe de chauffage disposée à distance et au-dessus du support. La rampe est adaptée pour développer une puissance de chauffe variable. Le dispositif peut alors comprendre un système de contrôle configuré pour régler la puissance développée par la rampe suivant au moins deux puissances :
- une puissance dite de décongélation ;
- une puissance dite de cuisson supérieure à la puissance de décongélation,

Ainsi, la puissance de décongélation est adaptée pour chauffer le produit alimentaire sans le cuire.

Le dispositif est ainsi adapté pour mettre en oeuvre le procédé tel que présenté ci-dessus.

### BRÈVE DESCRIPTION DES DESSINS

Des modes de réalisation de l'invention seront décrits ci-dessous par référence aux dessins, décrits brièvement ci-dessous :
[Fig. 1] est une vue schématique d'un exemple de réalisation d'un dispositif de chauffage et de cuisson vu de l'extérieur suivant une face avant.
[Fig. 2] est une vue schématique similaire à celle de figure 1, dans lequel une façade avant du dispositif a été retirée.
[Fig. 3] est une vue schématique du dispositif de la figure 2, vue en coupe de côté, selon un premier mode de réalisation.
[Fig. 4] est une vue schématique du dispositif de la figure 2, vue en coupe de côté, selon un deuxième mode de réalisation.

Sur les dessins, des références identiques désignent des objets identiques ou similaires.

### DESCRIPTION DÉTAILLÉE

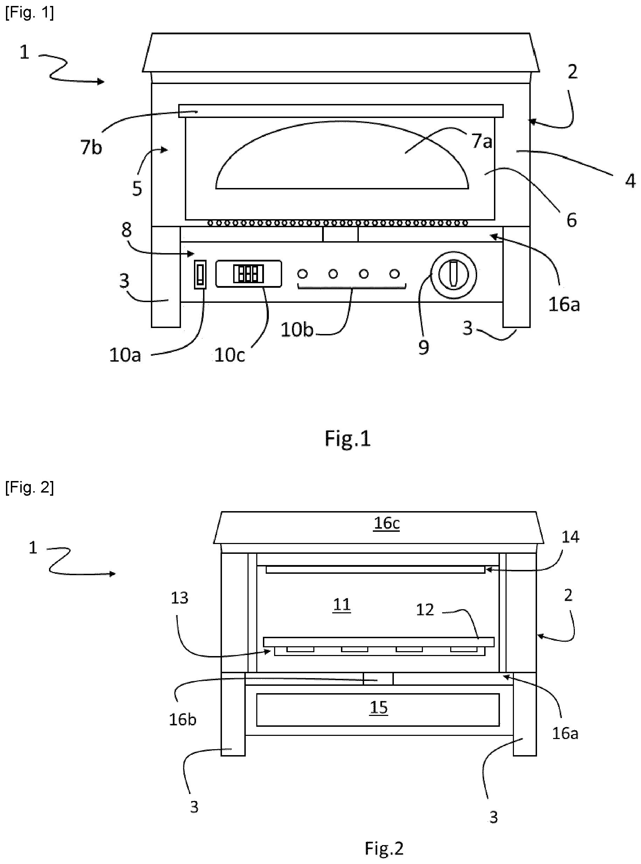

Sur la figure 1, il est représenté un dispositif **1** de chauffage et/ou de cuisson, de type four selon un mode de réalisation, vu de l'extérieur. Le dispositif 1 est adapté au chauffage et à la cuisson d'un produit alimentaire, notamment à pâte telle qu'une pizza. Plus précisément, le dispositif 1 est adapté pour mettre en oeuvre une étape de décongélation, comme cela sera explicité plus loin. Le dispositif 1 est destiné à être alimenté par un réseau électrique domestique, en monophasé, fournissant typiquement une tension nominale comprise entre 220V (Volts) et 240V.

Le dispositif 1 comprend un bâti **2** qui peut reposer sur un support de type table par l'intermédiaire de pieds **3.** Le bâti 2 présente une façade **4** avant, sur laquelle une ouverture **5** refermable est formée. Une porte **6** est articulée sur la façade 4 avant, pour ouvrir ou fermer l'ouverture 5. La porte 6 peut comprendre une portion **7a** vitrée donnant accès visuellement à l'intérieur du bâti 2 lorsque la porte 6 est fermée, et une poignée **7b.**

Dans ce qui suit, à des fins de clarté, on désigne une première direction horizontale avant / arrière comme étant une direction sur le four 1 s'étendant du côté de la façade 4 avant vers la direction opposée. On définit également une deuxième horizontale direction gauche/droite sensiblement perpendiculaire à la direction avant/arrière. Enfin, on utilisera les termes haut, bas, au-dessus, en-dessus, supérieur, inférieur et leurs variantes en référence à une direction verticale. Les directions horizontale et verticale s'entendent en référence à l'orientation naturelle du four 1 lorsqu'il est posé sur un support sur ses pieds 3 en vue de son utilisation.

Le dispositif 1 comprend en outre un panneau **8** de commande, placé sous la porte 6, qui comprend notamment un minuteur **9** par exemple sous la forme d'un bouton rotatif, un interrupteur **10a** général et un ensemble **10b** de boutons à actionner pour enclencher différents programmes, comme cela sera explicité plus loin. Le panneau 8 de commande peut également comprendre un écran **10c** de type affichage numérique, pour afficher une durée et/ou un numéro de programme par exemple.

L'intérieur du bâti 2 comprend une enceinte **11** de chauffage accessible par l'ouverture 5 sur la façade 4 avant, en particulier pour y placer un aliment à cuire, tel qu'une pizza. L'enceinte 11 est équipée d'au moins un support **12** sur lequel le produit est destiné à être posé. Le support 12 est de préférence une sole en matière réfractaire, notamment minérale et de faible densité, et par exemple en pierre de lave, afin d'absorber et de restituer de la chaleur rapidement.

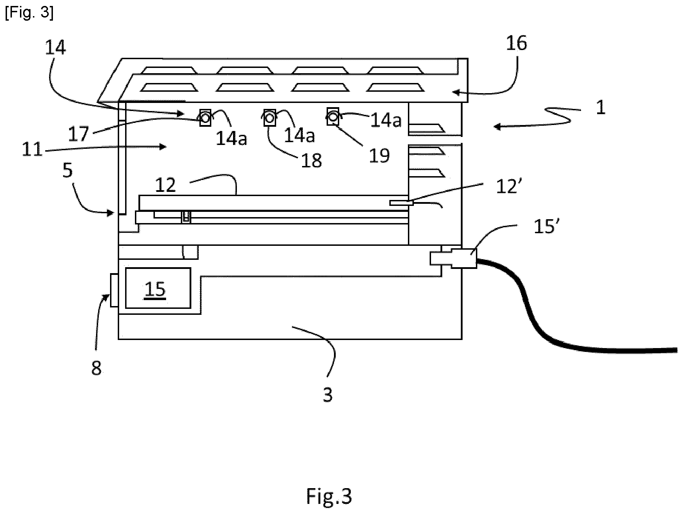

Le support 12 est associé à un ensemble **13** de chauffage du support. L'ensemble 13 de chauffage comprend par exemple une ou plusieurs résistances électriques, placées sous le support 12 et en contact, direct ou indirect, avec le support 12, afin de chauffer en particulier le support 12 de manière sensiblement homogène sur l'ensemble de sa surface. L'ensemble 13 de chauffage du support peut comprendre une sonde 12' de température (figure 3) qui permet de mesurer la température du support 12. La sonde 12' est par exemple placée dans une réservation pratiquée à l'intérieur du support 12. L'ensemble 13 de chauffage de support est ainsi destiné à chauffer spécifiquement le support 12, de sorte que la température du support 12 peut être contrôlée pour être différente de celle régnant ailleurs dans l'enceinte 11, et plus précisément peut être une température supérieure à celle régnant ailleurs dans l'enceinte 11. En d'autres termes, en général, la chaleur du support 12 est transmise à l'enceinte 11, et non l'inverse. Une telle construction a pour but de garantir une pâte croustillante.

L'enceinte 11 est également équipée d'au moins une rampe **14** de chauffage, placée au-dessus et à distance d'une face supérieure du support 12. Par exemple, la rampe 14 est fixée sur un plafond de l'enceinte 11, et la distance entre la rampe 14 et la face supérieure du support 12 est adaptée pour permettre à un produit alimentaire, telle qu'une pizza, d'être posé sur la face supérieure du support 12 sans entrer en contact avec la rampe 14.

Le panneau 8 de commande est connecté à un système de contrôle **15,** permettant de contrôler notamment l'ensemble 13 de chauffage et la rampe 14. Par système de contrôle, on, désigne ici l'ensemble des composants électroniques assurant notamment le contrôle de l'ensemble 13 de chauffage et de la rampe 14. Plus précisément, le système 15 de contrôle peut réguler la température du support 12 à partir des informations de l'ensemble 13 de chauffage, récoltées par exemple grâce à la sonde 12', par rapport à au moins une température de consigne.

On peut ainsi définir sur le dispositif 1 une partie haute comprenant notamment la façade 4 avant, la porte 6 et l'enceinte 11, et une partie basse comprenant le panneau 8 de commande et le système 15 de contrôle. Un espace **16a** est de préférence mis en place entre la partie haute et la partie basse, de manière à écarter les composants électroniques de la partie haute dont la température s'élève lors de la mise en oeuvre de l'ensemble 13 de chauffage et/ou de la rampe 14. L'espace 16a est de préférence libre, ou peut être rempli d'un matériau thermiquement isolant. En d'autres termes, l'espace 16a fournit une isolation thermique entre la partie haute, destinée à chauffer, et la partie basse comprenant les composants électroniques.

Les connexions électroniques requises entre le système 15 de contrôle et l'enceinte 11 peuvent alors passer par un col **16b** placé entre la partie haute et la partie basse. Le col 16b est de dimension réduite pour limiter les échanges de chaleur.

Un connecteur 15' destiné à être connecté à une alimentation électrique tel qu'un réseau électrique domestique permet d'alimenter le système 15 de contrôle.

Dans une partie supérieure, au-dessus de l'enceinte 11, le dispositif 1 peut comprendre un espace **16c** destiné à loger un système de ventilation de l'enceinte 11 pour dissiper l'humidité lors du chauffage dans l'enceinte 11, et éventuellement la chaleur à l'arrêt du dispositif 1.

Le système 15 de contrôle est configuré afin de régler la puissance développée par la rampe 14 suivant au moins deux puissances :
- une puissance dite de décongélation ;
- une puissance dite de cuisson, supérieure à la puissance de décongélation.

La puissance de décongélation est suffisamment élevée pour chauffer le produit surgelé ou congelé placé sur le support 12, sans toutefois le cuire. La température des aliments est ainsi doucement augmentée, permettant l'évacuation de l'humidité dans les aliments sans toutefois les cuire.

Ainsi, le dispositif 1 est particulièrement adapté pour chauffer et/ou cuire un produit alimentaire encore congelé, selon un procédé comprenant les étapes successives suivantes :
- une étape de mise en place du produit alimentaire sur le support 12 ;
- une étape dite de décongélation, dans laquelle la puissance de chauffe de la rampe 14 est réglée à une puissance dite de décongélation ;
- une étape dite de cuisson, dans laquelle la puissance de chauffe de la rampe 14 est réglée à une puissance dite de cuisson supérieure à la puissance de décongélation.

L'étape de décongélation succède ainsi à l'étape de cuisson sans retirer le produit du dispositif 1.

Le procédé comprend de plus la régulation de la température du support 12 par le système 15 de contrôle, vis-à-vis d'au moins une température de consigne atteinte au plus tard pendant la phase de cuisson. Plus précisément, une température de consigne pour le support 12 est déterminée afin d'assurer une pâte croustillante pour un produit alimentaire de type pizza. La température de consigne correspond à la température attendue du support 12 pendant la phase de cuisson, et de préférence au démarrage de la phase de cuisson. La température du support 12 est de préférence sensiblement maintenue à la température de consigne pendant l'étape de cuisson grâce à la gestion de l'allumage et de l'arrêt de l'ensemble de chauffage 13 par le système 15 de contrôle.

La rampe 14 peut être divisée en trois zones, qui sont réparties depuis l'ouverture 5, selon la direction avant/arrière : une première zone **17** dite avant, s'étendant à partir de l'ouverture 5, suivie d'une zone **18** dite centrale, elle-même suivie d'une zone **19** dite arrière. La puissance de chauffe de chaque zone 17 à 19 peut être contrôlée grâce au système 15 de contrôle. La puissance de chauffe de la rampe 14 correspond alors à la somme des puissances de chauffe de chaque zone 17 à 19.

De préférence, la puissance de chauffe de la zone 18 centrale, respectivement pendant l'étape de décongélation et pendant l'étape de cuisson, est supérieure à la puissance de chauffe de la zone 17 avant et la puissance de chauffe de la zone 19 arrière respectivement pendant l'étape de décongélation et l'étape de cuisson. Ainsi, le centre du produit alimentaire est davantage chauffé que sa périphérie, rendant le dispositif 1 particulièrement adapté à des produits alimentaires de type pizza. En outre, la puissance de chauffe de la zone 19 arrière respectivement pendant l'étape de décongélation et l'étape de cuisson, peut être inférieure ou égale à la puissance de chauffe de la zone 17 avant respectivement pendant l'étape de décongélation et de cuisson. En effet, la chaleur de la zone 17 avant, sur laquelle donne l'ouverture 5 du four, se dissipe plus rapidement que la chaleur de la zone 19 arrière. En apportant une puissance de chauffe supérieure dans la zone 17 avant par rapport à la puissance de la zone 19 arrière, l'homogénéité du chauffage et/ou de la cuisson du produit dans le dispositif 1 est améliorée.

Un premier mode de réalisation va maintenant être décrit, en référence notamment à la figure 3.

Selon ce premier mode de réalisation, au moins une zone 17 à 19 est formée par une unique lampe ou par un groupe de lampes, à puissance de chauffe variable de manière contrôlée par le système 15 de contrôle. Par exemple, et comme illustré sur la figure 3, chaque zone 17 à 19 comprend une unique lampe, dont la référence sur la figure 3 est confondue avec celle de la zone en question. Lorsqu'il s'agit d'un groupe de lampes, la puissance de chauffe correspond à la somme des puissances de chauffe des lampes du même groupe. Les lampes utilisées sont notamment des tubes infrarouges à ondes courtes à halogène s'étendant suivant la direction gauche/droite et qui sont sensiblement alignés suivant une direction horizontale, avant/arrière, du four 1. Ainsi, pendant l'étape de décongélation, la puissance de chaque zone 17 à 19 est baissée en baissant la puissance de chauffe de la lampe ou du groupe de lampes dans chaque zone. Puis, pendant l'étape de cuisson, la puissance chauffe de la lampe ou du groupe de lampes dans chaque zone est augmentée jusqu'à sa puissance nominale.

Par exemple, le système 15 de contrôle est configuré pour que, pendant l'étape de décongélation, :
- la puissance de chauffe de la zone 18 centrale de la rampe 14 est inférieure d'au moins 15% à la puissance de chauffe de la zone 18 centrale pendant l'étape de cuisson,
- la puissance de chauffe de la zone 17 avant de la rampe 14 est inférieure d'au moins 20% par rapport à puissance de chauffe de la zone 17 avant pendant l'étape de cuisson ;
- la puissance de chauffe de la zone 19 arrière de la rampe 14 est inférieure d'au moins 20% par rapport à la puissance de chauffe de la zone 19 arrière pendant l'étape de cuisson.

Ainsi, en utilisant des lampes à puissance variable, le nombre de lampes peut être le même que pour un four de l'art antérieur, limitant l'encombrement à l'intérieur de l'enceinte et ne nécessitant pas de revoir la configuration de l'enceinte 11.

Afin notamment de faciliter le contrôle du dispositif 1 et préserver les composants, la puissance de chauffe des lampes ou des groupes de lampes de chaque zone 17 à 19 de la rampe 14 pendant la phase de cuisson correspond de préférence à la puissance nominale des lampes ou groupes de lampes.

Par puissance nominale, on désigne ici et dans la suite la puissance maximale qui peut être fournie par une lampe dans des conditions normales d'utilisation.

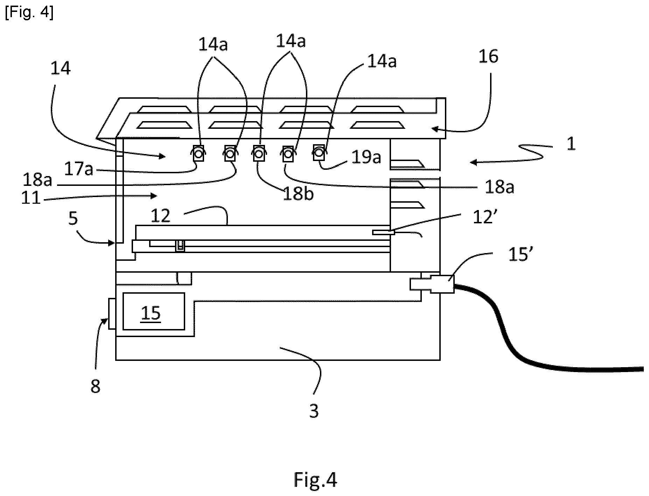

Un deuxième mode de réalisation va maintenant être décrit, notamment en référence à la figure 4.

Selon ce deuxième mode de réalisation, au moins une zone 17 à 19 peut comprendre au moins deux lampes halogènes, ou au moins deux groupes de lampes halogènes, à puissance fixe, la puissance de la zone 17 à 19 étant variée en allumant alternativement une lampe ou un groupe de lampes à la fois, l'autre lampe ou groupe de lampes étant éteints. La puissance nominale des deux lampes ou deux groupes de lampes d'une zone 17 à 19 est différente, de sorte qu'en fonction de la lampe ou du groupe de lampes allumées la puissance de chauffe de la zone en question est variée. Selon l'exemple illustré sur la figure 4, la zone 17 avant est formée d'une unique lampe 17a, la zone 18 centrale de deux groupes de lampes et la zone 19 arrière est formée d'une lampe 19a. Plus précisément, la zone 18 centrale comprend trois lampes : deux lampes 18a latérales placées de part et d'autre, suivant la direction avant/arrière, d'une lampe 18b centrale. Les deux lampes 18a latérales forment un premier groupe de lampes et la lampe 18b centrale forme un deuxième groupe.

Selon ce deuxième mode de réalisation, le système 15 de contrôle est configuré pour que :
- pendant l'étape de décongélation, seul le deuxième groupe de lampes 18a de la zone 18 centrale est allumé, toutes les autres lampes étant éteintes.
- pendant l'étape de cuisson, la lampe 17a de la zone avant, la lampe 19a de la zone arrière et la lampe 18b du deuxième groupe de la zone 18 centrale sont allumées, toutes les autres lampes étant éteintes.

Par allumée, on désigne ici le fait que la ou les lampes sont à leur puissance nominale, et par éteinte le fait que la puissance est nulle.

La puissance nominale du premier groupe de lampes 18a de la zone 18 centrale est de préférence supérieure à la puissance nominale de la lampe 18b du deuxième groupe de la zone 18 central. En effet, selon ce deuxième mode de réalisation, les lampes 18a du premier groupe de la zone 18 centrale assurent seules la chauffe pour l'étape de décongélation, la puissance de chauffe des zones 17 avant et 19 arrière étant nulle. Les lampes 18a du premier groupe de la zone 18 centrale peuvent être placées symétriquement l'une de l'autre par rapport à une ligne gauche/droite centrale dans l'enceinte 11, de manière à obtenir, pendant l'étape de décongélation, un gradient de températures dans l'enceinte 11 maximal sensiblement au centre de l'enceinte 11, et qui diminue vers l'avant et vers l'arrière.

Selon ce deuxième mode de réalisation, le contrôle des zones 17 à 19 est simplifié, ne nécessitant pas de composants électroniques pour gérer la variation de puissance d'une lampe : chaque lampe est soit allumée à sa puissance nominale, soit éteinte. L'électronique s'en trouve simplifié, et le coût de fabrication du dispositif 1 peut demeurer réduit.

En ajustant la puissance en fonction des zones 17 à 19, la décongélation et la cuisson sont réalisées de manière uniforme, notamment dans le cas d'une pizza. En effet, le centre de la pizza, généralement plus garni que la périphérie, nécessite un apport d'énergie supérieur. En diminuant la puissance des zones 17 à 19 dans l'étape de congélation, la température du produit alimentaire s'élève doucement, sans cuire les aliments, tout en permettant d'évacuer l'humidité contenue dans le produit et en procurant la décongélation du produit, c'est-à-dire l'élévation de sa température au-dessus de 0°C (degrés Celsius), afin de s'approcher d'une température de sortie de réfrigérateur, avant d'entamer la cuisson des aliments à proprement parler. En baissant davantage la puissance de la zone 17 avant et de la zone 19 arrière par rapport à la puissance de la zone 18 centrale, l'uniformité de la décongélation est optimisée.

La rampe 14 émet par exemple un rayonnement infrarouge à ondes courtes. A cet effet, la rampe 14 est par exemple formée par des émetteurs de type tubes infrarouges à ondes courtes. Plus précisément, les émetteurs de la rampe 14 sont de types tubes infrarouges à ondes courtes à halogène disposés dans l'enceinte 11 de manière à s'étendre sensiblement selon la direction gauche/droite du four 1. Les bornes de longueurs d'onde définissant le spectre infrarouge, ainsi que la définition de ses domaines, peuvent être variables en fonction des sources et des utilisations, tout comme les bornes du spectre infrarouge à ondes courtes. Toutefois, on désigne ici par rayonnement infrarouge à ondes courtes tout rayonnement infrarouge de longueurs d'ondes adaptées pour cuire un aliment dans l'enceinte 11. Ainsi, par ondes courtes, on désigne ici notamment les ondes infra-rouges de longueur d'onde comprises entre 700nm (nanomètres) et 10000nm, par exemple entre 800nm et 4000nm, par exemple encore entre 1000nm et 2000nm, et par exemple encore égales à 1200nm.

Les tubes émetteurs de la rampe 14 peuvent, selon un mode de réalisation particulier, être recouvert sur une partie supérieure de leur portion d'un réflecteur. Par exemple, le réflecteur comprend autant de plaques 14a que de tubes de la rampe 14, chaque tube étant associé à une plaque 14a. La plaque 14a est courbée pour s'étendre sur la longueur et sensiblement sur 180° maximum autour du tube correspondant, d'un côté opposé à celui du support 12, de sorte que le réflecteur réfléchit les ondes émises vers le haut, à l'opposé du support 12, par les tubes afin de rediriger les ondes vers le bas, vers le support 12. Le rendement du chauffage s'en trouve augmenté.

La durée de l'étape de décongélation peut être fixée, enregistrée dans le système 15 de contrôle.

La durée de l'étape de cuisson peut être adaptée au produit. Par exemple, dans le cas d'une pizza, l'épaisseur de la pâte et/ou l'épaisseur de la garniture peuvent être pris en compte pour régler la durée de l'étape de cuisson.

Selon un mode de réalisation, le support 12 a de préférence atteint une température de consigne au plus tard au démarrage de l'étape de cuisson, c'est-à-dire que lorsque la puissance de la rampe 14 atteint la puissance de cuisson, le support 12 a déjà atteint la température de consigne ou atteint la température de consigne concomitamment. A cet effet, par exemple l'ensemble 13 de chauffage peut être actionné pendant l'étape de décongélation, de sorte que la température de consigne du support 12 est atteinte pendant l'étape de décongélation. Dans ce cas, la puissance de l'ensemble 13 de chauffage est adaptée pour que la puissance du dispositif pendant l'étape de décongélation reste compatible avec le réseau électrique domestique sur lequel il est branché. En variante, l'ensemble 13 de chauffage peut être actionné avant l'étape de décongélation, de sorte que la température de consigne du support est atteinte au démarrage de l'étape de décongélation. L'ensemble 13 de chauffage est alors éteint avant que la rampe 14 soit actionnée, de manière à ce que la puissance consommée par le dispositif 1 demeure inférieure à une valeur acceptée par l'alimentation sur le réseau électrique domestique. Avantageusement, le dispositif 1 comprend, par exemple sur le panneau 10 de commande sur la façade 4 avant, un voyant lumineux, éventuellement accompagné d'un signal sonore, indiquant que le support 12 a atteint la température de consigne.

La température 12 du support, une fois la température de consigne atteinte, ne diminue que très lentement. Lorsque sa température est inférieure à la température de consigne d'une valeur déterminée, l'ensemble 13 de chauffage est actionné. Cet actionnement est très rapide, par exemple de l'ordre de quelques secondes, le support 12 emmagasinant rapidement la chaleur. Le système 15 de contrôle gère alors la puissance totale du dispositif pour qu'elle demeure compatible avec l'alimentation du réseau électrique domestique.

Grâce à la mise en oeuvre de ce procédé, il est assuré une cuisson optimale du produit. La décongélation est réalisée rapidement.

On va maintenant décrire un exemple de mise en oeuvre du procédé.

Un utilisateur allume l'ensemble 13 de chauffage du support en actionnant l'interrupteur général 10a sur le panneau 8 de commande. L'ensemble 13 de chauffage s'allume alors et la température du support 12 augmente en conséquence. Une fois la température de consigne pour le support 12 atteinte, le voyant lumineux s'allume, éventuellement accompagné d'un signal sonore. L'utilisateur place alors le produit sur le support 12 dans l'enceinte 11, règle un temps de cuisson à l'aide du minuteur 9, et lance un programme mettant en oeuvre le procédé de chauffage et/ou de cuisson. L'étape de décongélation, d'une durée prédéterminée, s'enclenche alors, suivie de l'étape de cuisson dont la durée a été réglée grâce au minuteur. L'étape de cuisson peut se déclencher automatiquement à la fin de l'étape de décongélation, ou sur commande de l'utilisateur. La durée de l'étape de décongélation et/ou la durée de l'étape de cuisson peuvent être variables en fonction des programmes, ou être fixes pour tout ou partie des programmes. De même, la puissance des zones 17, 18, 19 de la rampe 14 de chauffage pendant l'étape de décongélation et/ou pendant l'étape de cuisson peut être variable en fonction des programmes, ou être fixe pour tout ou partie de chaque programme.

Le dispositif 1 est également adapté pour ne mettre en oeuvre que l'étape de cuisson, sans l'étape de décongélation, par exemple dans le cas où le produit alimentaire n'est pas congelé ou d'épaisseur suffisamment faible. A cet effet, le système 15 contrôle peut comprendre un programme sans étape de décongélation, actionnable par un bouton sur le panneau 8 de commande.

L'utilisateur peut ainsi choisir un programme avec ou sans étape décongélation.

Selon un mode de réalisation, le système 15 de contrôle comprend un système de communication avec un appareil informatique séparé et à distance du dispositif 1, par exemple de type tablette informatique ou smartphone, permettant, par exemple par l'intermédiaire d'une application dédiée affichée sur l'appareil, à un utilisateur d'accéder à différents programmes du dispositif 1 ; le système de communication est par exemple de type Bluetooth. L'utilisateur peut alors programmer le dispositif 1 ou changer le programme à partir de son smartphone, ne nécessitant pas d'être à côté du four.

Plus précisément, le panneau 8 de commande peut présenter un ensemble 10c de boutons en nombre limité, la place sur le panneau 8 de commande étant elle-même limitée. Chaque bouton est identifié et associé à un programme. Ainsi, le nombre de programmes possibles pour un dispositif 1 est nécessairement limité également. Or, en fonction du type d'utilisation, c'est-à-dire en fonction de l'emplacement du dispositif 1 ainsi que des produits à chauffer, les programmes nécessaires peuvent être différents, de sorte que la limitation du nombre de programmes empêche d'adapter le dispositif à tout type d'utilisations.

Afin de pouvoir adapter facilement les programmes disponibles sur le dispositif 1 en fonction de l'utilisation prévue, le programme associé à chaque bouton de l'ensemble 10c est modifiable par communication Bluetooth.

Par exemple, chaque programme enregistré dans le système 15 de contrôle correspond à durées différentes pour l'étape de décongélation et/ou pour l'étape de cuisson. Ainsi, par exemple :
- un premier bouton est associé à un premier programme sans étape de décongélation et uniquement une étape de cuisson, particulièrement adapté à des produits de type pizzas peu épaisses ;
- un deuxième bouton est associé à un deuxième programme avec une étape de décongélation d'une première durée, et une étape de cuisson d'une deuxième durée ;
- un troisième bouton est associé à un troisième programme avec une étape de décongélation d'une troisième durée et une étape de cuisson d'une quatrième durée ;
- un quatrième bouton associé à un quatrième programme sans étape de cuisson, et uniquement une étape de décongélation.

Grâce à la communication par Bluetooth, sans intervenir physiquement sur le dispositif 1 ou le système 15 de contrôle, il est notamment possible alors de régler chacune des durées de chaque programme, voire de modifier le contenu des programmes.

De préférence, dans chacun des programmes, la rampe 14 de chauffage et l'ensemble 13 de chauffage sont mis en oeuvre séparément, c'est-à-dire qu'ils ne sont jamais allumés en même temps.

Un tel réglage peut être fait en usine, avant la livraison du dispositif 1 à l'utilisateur, ou directement par l'utilisateur qui souhaite adapter les programmes du dispositif 1 en fonction de ses besoins. Notamment, dans le cas de produits de types panini ou croque-monsieur, une étape de décongélation seule, sans étape de cuisson, peut suffire à obtenir un produit prêt à être consommé. A l'inverse, pour une utilisation exclusivement pour cuire des pizzas, il sera préférable de toujours prévoir une étape de cuisson.

## Revendications

1. Procédé de chauffage et/ou de cuisson d'un produit alimentaire congelé ou surgelé, notamment d'une pâte alimentaire surgelée ou congelée, à l'aide d'un dispositif (1) destiné à être connecté à une installation électrique en monophasé, le dispositif (1) comprenant au moins une enceinte (11) de chauffage munie d'une ouverture (5) refermable pour y insérer le produit, ladite enceinte (11) étant équipée d'au moins un support (12) sur lequel le produit est destiné à être posé, un ensemble (13) de chauffage du support, et au moins une rampe (14) de chauffage disposée à distance et au-dessus du support (12), dans lequel la rampe (14) est adaptée pour développer une puissance de chauffe variable et dans lequel le dispositif (1) comprend un système (15) de contrôle configuré pour régler la puissance de l'ensemble (13) de chauffage et de la rampe (14), le procédé étant **caractérisé en ce qu'**il comprend :
- une étape de mise en place du produit alimentaire sur le support (12) ;
- une étape dite de décongélation, dans laquelle la puissance de chauffe de la rampe (14) est réglée à une puissance dite de décongélation ;
- une étape dite de cuisson, dans laquelle la puissance de chauffe de la rampe (14) est réglée à une puissance dite de cuisson supérieure à la puissance de décongélation,
de sorte que pendant l'étape de décongélation, le produit alimentaire est chauffé sans être cuit
et procédé dans lequel la température du support (12) est régulée par le système (15) de contrôle pour atteindre une température de consigne au plus tard pendant l'étape de cuisson.

2. Procédé de chauffage et/ou de cuisson selon la revendication 1, dans lequel ladite rampe (14) comprend au moins trois zones de chauffage à puissance variable, à savoir successivement depuis l'ouverture (5) de l'enceinte (11) une zone (17) dite avant, une zone (18) dite centrale et une zone (19) dite arrière, la puissance de chauffe de chaque zone (17, 18, 19) étant réglée par le système (15) de contrôle, procédé dans lequel la puissance de chauffe de la zone (18) centrale, respectivement pendant l'étape de décongélation et pendant l'étape de cuisson, est supérieure à la puissance de chauffe de la zone (17) avant et la puissance de chauffe de la zone (19) arrière respectivement pendant l'étape de décongélation et l'étape de cuisson.

3. Procédé de chauffage et/ou de cuisson selon la revendication 2 précédente, dans lequel la puissance de chauffe de la zone (19) arrière respectivement pendant l'étape de décongélation et l'étape de cuisson, est inférieure ou égale à la puissance de chauffe de la zone (17) avant respectivement pendant l'étape de décongélation et de cuisson.

4. Procédé selon l'une quelconque des revendications précédentes, dans lequel, pendant l'étape de décongélation :
- la puissance de chauffe de la zone (18) centrale de la rampe (14) est réglée pour être inférieure d'au moins 15% à la puissance de chauffe de la zone (18) centrale pendant l'étape de cuisson,
- la puissance de chauffe de la zone (17) avant de la rampe (14) est réglée pour être inférieure d'au moins 20% par rapport à puissance de chauffe de la zone (17) avant pendant l'étape de cuisson ;
- la puissance de chauffe de la zone (19) arrière de la rampe (14) est réglée pour être inférieure d'au moins 20% par rapport à la puissance de chauffe de la zone (19) arrière pendant l'étape de cuisson.

5. Procédé selon la revendication précédente, dans lequel chaque zone (17, 18, 19) de la rampe (14) est formée par une lampe ou un groupe de lampes, le système (15) de contrôle réglant la puissance de chauffe de chaque zone pendant l'étape de cuisson comme correspond à une puissance nominale de la lampe ou du groupe de lampes.

6. Procédé selon l'une quelconque des revendications 1 à 3, dans lequel :
- la puissance de chauffe de la zone (18) centrale de la rampe (14) pendant l'étape de décongélation est supérieure à la puissance de chauffe de la zone (18) centrale de la rampe (14) pendant l'étape de cuisson ;
- la puissance de chauffe de la zone (17) avant et la puissance de chauffe de de la zone (19) arrière pendant l'étape de décongélation sont nulles.

7. Procédé selon la revendication précédente, dans lequel la zone (17) avant et la zone (19) arrière comprennent chacune une lampe ou un groupe de lampe et la zone (18) centrale comprend au moins une première lampe ou un premier groupe de lampes et une deuxième lampe ou un deuxième groupe de lampes, et dans lequel :
- pendant l'étape de décongélation, la lampe ou le groupe de lampe de chacune de la zone (17) avant et de la zone (19) arrière est éteint, la première lampe ou le premier groupe de lampes de la zone (18) centrale est allumé à sa puissance nominale et la deuxième lampe ou deuxième groupe de lampes est éteint ;
- pendant l'étape de cuisson, la lampe ou le groupe de lampe de chacune de la zone (17) avant et de la zone (19) arrière est allumé à sa puissance nominale, la première lampe ou le premier groupe de lampes de la zone (18) centrale est éteint et la deuxième lampe ou deuxième groupe de lampes est allumé à la puissance nominale.

8. Procédé selon l'une quelconque des revendications précédentes, dans lequel, préalablement à l'étape de mise en place sur le support (12), l'ensemble (13) de chauffage du support est actionné pour chauffer ledit support (12) jusqu'à une température de consigne et maintenir le support à la température de consigne.

9. Procédé selon la revendication précédente, dans lequel, une fois la température de consigne atteinte, l'ensemble (13) de chauffage du support est éteint avant d'enclencher l'étape de cuisson.

10. Procédé selon la revendication 8, dans lequel, une fois la température de consigne atteinte, l'ensemble (13) de chauffage du support est éteint avant d'enclencher l'étape de décongélation.

11. Procédé selon l'une quelconque des revendications précédentes, dans lequel la rampe (14) comprend des lampes halogènes à ondes infrarouges courtes.

12. Procédé selon l'une quelconque des revendications précédentes dans lequel l'ensemble (13) de chauffage du support comprend des résistances électriques en contact avec le support (12).

13. Procédé selon l'une quelconque des revendications précédentes, dans lequel le dispositif (1) comprend un système de communication avec un appareil informatique, le procédé comprenant une étape de réglage des durées de l'étape de décongélation et/ou de l'étape de cuisson via l'appareil informatique.

14. Dispositif (1) de chauffage et/ou de cuisson d'un produit alimentaire congelé ou surgelé, notamment d'une pâte alimentaire surgelée ou congelée, ledit dispositif (1) étant destiné à être connecté à une installation électrique en monophasé, le dispositif (1) comprenant au moins une enceinte (11) de chauffage munie d'une ouverture (5) refermable pour y insérer le produit, ladite enceinte (11) étant équipée d'au moins un support (12) sur lequel le produit est destiné à être posé, un ensemble (13) de chauffage du support, et au moins une rampe (14) de chauffage disposée à distance et au-dessus du support (12), dans lequel la rampe (14) est adaptée pour développer une puissance de chauffe variable et dans le dispositif (1) comprend un système (15) de contrôle configuré pour régler la puissance développée par la rampe (14) suivant au moins deux puissances :
- une puissance dite de décongélation ;
- une puissance dite de cuisson supérieure à la puissance de décongélation,
de sorte que la puissance de décongélation soit adaptée pour chauffer le produit alimentaire sans le cuire,
le système (15) de contrôle étant configuré en outre pour contrôler la puissance de chauffage de l'ensemble (13) de chauffage de support, de sorte que le support (12) peut atteindre et être maintenu à une température de consigne.
